# EUROPEAN PATENT SPECIFICATION

(11) **EP 2 429 227 B1**
(45) Date of publication and mention of the grant of the patent: **15.06.2016**
(21) Application number: 11732672.8
(22) Date of filing: 13.01.2011
(51) Int. Cl.: H04W 12/04, H04L 29/06, H04W 36/00, H04W 36/10

(54) **METHOD AND SYSTEM FOR UPDATING AIR INTERFACE KEYS**
VERFAHREN UND SYSTEM ZUR AKTUALISIERUNG VON LUFTSCHNITTSTELLENSCHLÜSSELN
PROCÉDÉ ET SYSTÈME DE MISE À JOUR DE CLÉS D'INTERFACE RADIO

(30) Priority: 14.01.2010 CN 201010002260
(43) Date of publication of application: 14.03.2012
(73) Proprietor: ZTE Corporation, Shenzhen, Guangdong 518057 (CN)
(72) Inventor: FENG, Chengyan, Shenzhen Guangdong 518057 (CN); GAN, Lu, Shenzhen Guangdong 518057 (CN)
(74) Representative: Manitz, Finsterwald & Partner GbR
(86) International application number: PCT/CN2011/070228
(87) International publication number: WO 2011/085682

(56) References cited:
- CN-A- 101 232 731
- CN-A- 101 304 311
- CN-A- 101 309 503
- CN-A- 101 400 059
- CN-A- 101 521 656
- CN-A- 101 715 188
- "3rd Generation Partnership Project;Technical Specification Group Services and System Aspects;Study on the Introduction of Key Hierarchy in UTRAN(Release 9)", 3GPP DRAFT; S3-091157_UTRAN-KH_UDT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shanghai; 20090515, 15 May 2009 (2009-05-15), XP050347764, [retrieved on 2009-05-15]
- "3rd Generation Partnership Project;Technical Specification Group Services and System Aspects;3GPP System Architecture Evolution (SAE):Security architecture;(Release 9)", 3GPP DRAFT; 33401-920, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, 18 December 2009 (2009-12-18) , XP050435334, [retrieved on 2009-12-18]
- "3rd Generation Partnership Project; Technical Specification Group Radio Access Network; Radio Resource Control (RRC); Protocol Specification (Release 6)", 3GPP STANDARD; 3GPP TS 25.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V6.24.0, 9 January 2010 (2010-01-09), pages 1-1253, XP050401832, [retrieved on 2010-01-09]

## Description

### Technical Field

The present invention relates to the field of communication, and in particular, to a method and a system for updating an air interface key during SRNC relocation in a radio communication system.

### Background Art

Release7 of the 3rd Generation Partnership Project (3GPP) adopts Orthogonal Frequency Division Multiplexing (OFDM) and Multiple-Input Multiple-Output (MIMO) techniques to implement the future evolution path HSPA+ of High Speed Downlink Packet Access (HSDPA) and High Speed Uplink Packet Access (HSUPA). HSPA+ is an enhanced technique of 3GPP HSPA (including HSDPA and HSUPA), which provides a path of smoothly evolving from HSPA to LTE with low complexity and low costs for High Speed Packet Access (HSPA) operators.

HSPA+ increases the peak data rate and the spectrum efficiency by adopting techniques such as higher-order modulation (for example, downlink 64 Quadrature Amplitude Modulation (64QAM) and uplink 16QAM), MIMO and a combination of higher-order modulation and MIMO. On the other hand, in order to better support packet services, HSPA+ also adopts a series of other enhanced techniques to achieve the objects such as increasing the user capacity, reducing delay, reducing terminal power consumption, and better supporting Voice over IP (VOIP) communication and improving the multicast/broadcast capability of the system and the like.

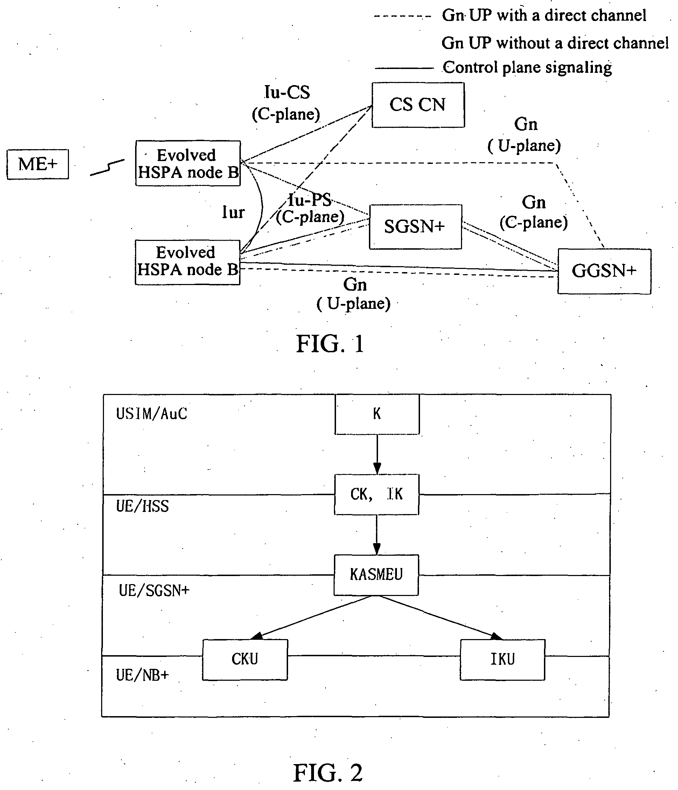

Compared with HSPA, in the system architecture of HSPA+, the functions of the Radio Network Controller (RNC) are moved down to the Node B to form a completely flattened radio access network architecture, as shown in FIG. 1. In this case, the Node B integrated with all of the functions of RNC is called as an Evolved HSPA Node B, or an enhanced Node B (Node B+). SGSN+ is an upgraded Service GPRS Support Node (SGSN, wherein GPRS: General Packet Radio Service) that is able to support HSPA+ functions. ME+ is user terminal equipment that can support HSPA+ functions. An evolved HSPA system can use air interface (AI) versions of 3GPP Rel-5 and those after 3GPP Rel-5, without any amendment to the HSPA service of the air interface. With this scheme, every Node B+ becomes a node equivalent to a RNC and has an Iu-PS interface for directly connecting with a Packet Switched (PS) Core Network (CN), wherein the Iu-PS user plane terminates at SGSN, and if the network supports a direct tunnel function, the Iu-PS user plane may also terminate at the Gateway GPRS Support Node (GGSN). Communication between evolved HSPA Nodes B is implemented via an Iur interface. Node B+ has the capability of independently networking, and supports full mobility functions, including inter-system and intra-system handover.

User plane data may directly arrive at GGSN without passing through RNC after flattening, which means that the encryption and integrity protection functions of the user plane must be moved forwards to Node B+. The hierarchy structure of the current proposed HSPA+ security key is as shown in FIG. 2, wherein definitions of Key (K), Ciphering Key (CK) and Integrity Key (IK) are exactly the same with those in a Universal Mobile Telecommunications System (UMTS). That is, K is a root key that is stored in the Authentication Center (AuC) and Universal Subscriber Identity Module (USIM), CK and IK are the ciphering key and integrity key calculated from K when the user equipment and Home Subscriber Server (HSS) perform Authentication and Key Agreement (AKA). In UMTS, the RNC uses CK and IK to perform encryption and integrity protection for data. Since all functions of the RNC are moved down to the Node B+ in the HSPA+ architecture, both encryption and decryption need to be implemented at the Node B+, however, Node B+ is located in a unsafe environment and the security is not very high. Accordingly, a key hierarchy, i.e., UTRAN Key Hierarchy, similar to the Evolved Universal Terrestrial Radio Access Network (EUTRAN) is introduced into HSPA+. In the UTRAN Key Hierarchy structure, the medium key K_{ASMEU} is a key newly introduced into HSPA+, which is deduced from CK and IK. Furthermore, K_{ASMEU} generates CK_{U} and IK_{U} (wherein, the ciphering key in the core network may also be represented as CK_{S}, and the integrity key may also be represented as IK_{S}), wherein CKu is used to encrypt the user plane data and the control plane signaling, and the IKu is used to perform integrity protection on the control plane signaling.

In a Wideband Code Division Multiple Access (WCDMA) system, the concepts of Serving RNC (SRNC)/Drift RNC (DRNC) are generated due to the introduction of the Iur interface. Both SRNC and DRNC are directed to certain one of specific UE and are logical concepts. Simply speaking, for a certain UE, if the RNC directly connects to the CN in the connection between the RNC and the CN and controlling all resources of the UE, the RNC is called as the SRNC of the UE; if the RNC does not connect to the CN in the connection between the RNC and the CN and only provides resources for the UE, the RNC is called as the DRNC of the UE. The UE in the connected state must and can only have one SRNC, but may have 0 or a plurality of DRNCs.

SRNC Relocation refers to a process during which the SRNC of a UE changes from one RNC to another RNC. Based on different locations of the UE before and after occurrences of relocation, relocation is divided into static relocation and accompanying relocation, or is divided into UE Not Involved relocation and UE Involved relocation.

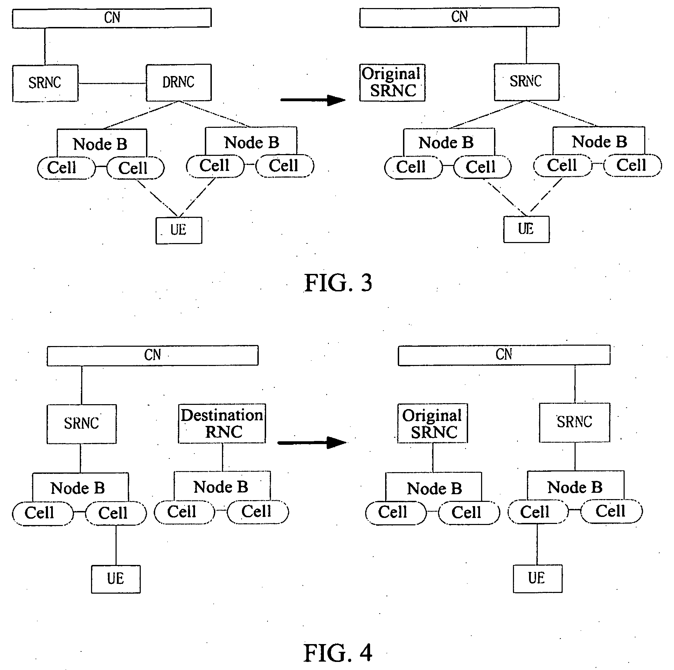

The condition for the occurrence of static relation is that the UE accesses one DRNC and only accesses the DRNC. Since the relocation process does not involve the UE, this relocation is also called as UE Not Involved relocation. After the occurrence of relocation, the connection of the Iur interface is released, the Iur interface is relocated, and the original DRNC becomes SRNC, as shown in FIG. 3. Static relocation is caused in the soft handover, and the relocation is not rushed due to the Iur interface, it will not occur until all radio links reach DRNC.

Accompanying relocation refers to a process during which the UE is performed hard handover from the SRNC to the destination RNC and meanwhile the Iu interface changes, as shown in FIG. 4. Since this relocation process involves the UE, it is also called as UE Involved relocation.

In a UMTS system, neither CK nor IK varies before and after SRNC relocation. The DRNC acquires the integrity protection information (including the integrity key IK and the allowed integrity protection algorithm) and/or encryption information (including the ciphering key CK and the allowed encryption algorithm) of the UE from the SRNC or SGSN.

Some features of the independent claims are known from the document "3rd Generation Partnership Project; Technical Specification Group Services and System Aspects; Study on the Introduction of Key Hierarchy in UTRAN (Release 9)", 3GPP TR 33.ukh V0.1.0, 2009-05, XP050347764. A further relevant document is 3GPP TS 33.401, V9.2.0, XP50435334.

### Summary of the Invention

Since Node B+ is located in a physically unsafe environment and thus is apt to suffer malicious attacks, its security is subject to threats. In a conventional UMTS, if the key is not updated when the SRNC is relocated, and if the key is divulged or is illegally obtained by the attacker, then the attacker can monitor the communication of the user all the time, and also can fake the data transmission between the user and the network. In order to solve this problem, the key is updated in real time when the SRNC is relocated, thereby solving the above problem and reducing the security risk.

The method and apparatus according to the present invention are defined in the independent claims, and the preferable features according to the present invention are defined in the dependent claims.

In the SRNC relocation involved in HSPA+, Node B+ may be regarded as a combination of a Node B and a RNC. They are a single physical entity but are still two different logical entities. Therefore, the Node B+ supporting the HSPA+ key hierarchy in the present invention may also be equivalent to the upgraded RNC, which may be called as RNC+ for the purpose of differentiation, in UMTS. Accordingly, the SRNC+ is equivalent to the source Node B+ and the DRNC+ is equivalent to the destination Node B+ in the present invention.

The technical problem to be solved in the present invention is to provide a method and a system for updating an air interface key to improve the security of the system.

In order to solve the above problem, a method for updating an air interface key is provided, which comprises:
after a serving radio network controller making a decision to perform relocation, the serving radio network controller sending key information to a destination radio network controller directly or via a core network node; or the serving radio network controller notifying the core network node to send the key information to the destination radio network controller.

The method further comprises:
the destination radio network controller updating a key according to received key information, and calculating to obtain an updated integrity key IK_{U} and/or ciphering key CK_{U}.

In the above method, said step of the serving radio network controller sending key information to the destination radio network controller directly or via the core network node comprises:
the serving radio network controller updating the key according to the key information and sending updated key information to the destination radio network controller directly or via the core network node.

In the above method, said step of the core network node sending the key information to the destination radio network controller comprises:
the core network node updating a key according to the key information, and sending updated key information to the destination radio network controller.

Wherein, said key information at least includes one of following parameters or any combination thereof: a medium key K_{ASMEU}, a ciphering key CK_{U}, and an integrity key IK_{U}.

In the above method, in said step of the destination radio network controller updating the key according to the received key information, or in said step of the serving radio network controller updating the key according to the key information, or in said step of the core network node updating the key according to the key information,
when the key information includes the medium key, an entity for updating the key calculates to obtain updated ciphering key and integrity key according to the medium key;
when the key information does not include the medium key, the entity for updating the key calculates to obtain updated ciphering key and integrity key according to un-updated ciphering key and integrity key.

In the above method, said key information further includes one of following parameters or any combination thereof: an encryption algorithm supported by a user, an integrity algorithm supported by the user, a selected encryption algorithm, and a selected integrity algorithm.

In the above method, said key information further includes one of following parameters or any combination thereof: a destination radio network controller identifier, a frequency point allocated to user equipment by the destination radio network controller, a scrambling code allocated to the user equipment by the destination radio network controller, a subscriber identifier, a start parameter defined in a Universal Mobile Telecommunications System, an integrity sequence number parameter defined in the Universal Mobile Telecommunications System, a radio resource control sequence number parameter defined in the Universal Mobile Telecommunications System, and a radio link control sequence number parameter defined in the Universal Mobile Telecommunications System.

In the above method, said key information further includes: a repeat network access counter;
said method further comprises: user equipment and the serving radio network controller, or a user terminal and the destination radio network controller, managing the repeat network access counter respectively, and initializing the repeat network access counter after successfully completing a process of Authentication and Key Agreement, or after the repeat network access counter reaches a maximum threshold.

In the above method, when updating the key, the user equipment progressively increases a repeat network access counter value stored per se, and updates the key according to the repeat network access counter value after progressive increase;
the serving radio network controller updates the key according to a repeat network access counter value stored per se, or the core network node or the destination radio network controller update the key according to the repeat network access counter value received from the serving radio network controller.

Said method further comprises:
the user equipment including a repeat network access counter value maintained by the user equipment in a physical channel reconfiguration completion message or a Universal Terrestrial Radio Access Network mobility information confirmation message sent to the destination radio network controller.

Said method further comprises:
after receiving the physical channel reconfiguration completion message or the Universal Terrestrial Radio Access Network mobility information confirmation message sent by the user equipment, the destination radio network controller comparing the repeat network access counter value maintained by the destination radio network controller self with the repeat network access counter value received from the user equipment, and if the two values are equal, then the destination radio network controller directly verifying the physical channel reconfiguration completion message or the Universal Terrestrial Radio Access Network mobility information confirmation message; if the repeat network access counter value received from the user equipment is larger than the repeat network access counter value maintained by the destination radio network controller self, then the destination radio network controller substituting the repeat network access counter value received from the user equipment for the repeat network access counter value maintained by the the destination radio network controller self, updating the air interface key, and then verifying received message; if the repeat network access counter value received from the user equipment is smaller than the repeat network access counter value maintained by the destination radio network controller self, then verification being unsuccessful, and the destination radio network controller operating according to an operator's policy.

In the above method,
said key information further includes one of following parameters or any combination thereof: a random number generated by the serving radio network controller, a random number generated by the core network node, a random number generated by the destination radio network controller, and a random number generated by the user equipment.

Said method further comprises:
when the key information includes the random number generated by the serving radio network controller and/ or the random number generated by the core network node and/or the random number generated by the destination radio network controller, the serving radio network controller or the core network node or the destination radio network controller updating the air interface key according to the random number(s).

Said method further comprises:
when the key information includes the random number generated by the serving radio network controller and/or the random number generated by the core network node and/or the random number generated by the destination radio network controller, the destination radio network controller sending the random number(s) through a relocation confirmation message to the user equipment via a transfer of the serving radio network controller, or the serving radio network controller or the destination radio network controller directly sending the random number(s) to the user equipment.

Said method further comprises:
when the key information includes the random number generated by the user equipment, the user equipment updating the air interface key according to a random number that is newly generated after receiving a relocation confirmation message sent by a network side; the user equipment sending a physical channel reconfiguration completion message or a Universal Terrestrial Radio Access Network mobility information confirmation message including the ramdon number geneated by the user equipment to the destination radio newtork controller; the destination radio network controller updating the air interface key according to the random number after receiving the message.

In the above method, the relocation confirmation message sent to the user equipment by the serving radio network controller is one of following messages: a physical channel reconfiguration message, a Universal Terrestrial Radio Access Network mobility information confirmation message, a Universal Moible Telecommunication System register area update confirmation message, and a cell update confirmation message.

In the above method, when a random number is generated by the destination radio network controller, the random number is a fresh parameter defined in a Universal Mobile Telecommunication System.

In order to solve the above problem, a system for updating an air interface key is further provided, which comprises a serving radio network controller and a destination radio network controller; wherein
the serving radio network controller is configured to: send key information to the destination radio network controller directly or via a core network node after deciding to perform relocation; or notify the core network node to send the key information after deciding to perform relocation.

In the above system, the destination radio network controller is configured to: update a key according to the key information, and calculate to obtain updated integrity key IK_{U} and/or ciphering key CK_{U}.

In the above system, the destination radio network controller is configured to: receive updated integrity key IK_{U} and/or ciphering key CK_{U}.

In the above system, the serving radio network controller is configured to send the key information to the destination radio network controller directly or via the core network node in a following mode: after updating the key according to the key information, sending updated key information to the destination radio network controller directly or via the core network node.

The system for updating further comprises a core network node,
wherein the core network node is configured to: send the key information sent by the serving radio network controller and/or the key information stored per se to the destination radio network controller; or after updating the key according to the key information, send updated key information to the destination radio network controller.

Wherein, said key information at least includes one of following parameters or any combination thereof: a medium key KASMEU, a ciphering key CK_{U}, and an integrity key IK_{U}.

In order to solve the above problem, a radio network controller is further provided, which is configured to:
when the radio network controller is a serving radio network controller, send key information to a destination radio network controller directly or via a core network node after making a decision to perform relocation; or, notify the core network node to send the key information after making the decision to perform relocation.

The radio network controller is further configured to:
when the radio network controller is a destination radio network controller, update the key according to the key information, and calculate to obtain updated integrity key IK_{U} and/or ciphering key CK_{U}.

The radio network controller is further configured to:
when the radio network controller is a destination radio network controller, receive updated integrity key IK_{U} and/or ciphering key CK_{U}.

Wherein, when the radio network controller is the serving radio network controller, the radio network controller is configured to send the key information to the destination radio network controller directly or via the core network node in a following mode: after updating the key according to the key information, sending updated key information to the destination radio network controller directly or via the core network node.

Wherein, said key information at least includes one of following parameters or any combination thereof: a medium key K_{ASMEU}, a ciphering key CK_{U}, and an integrity key IK_{U}.

The updating method and system can improve the security of the system.

### Brief Description of Drawings

FIG. 1 is a schematic diagram of the architecture of the radio access network adopting the HSPA+ technique in the prior art;
FIG. 2 is a schematic diagram of the HSPA+ security key hierarchy structure in the prior art;
FIG. 3 is a schematic diagram of SRNC static relocation in the prior art;
FIG. 4 is a schematic diagram of SRNC accompanying relocation in the prior art;
FIG. 5 is an example for updating an air interface key in a radio communication system according to Example 1;
FIG. 6 is an example for updating an air interface key in a radio communication system according to Example 3;
FIG. 7 is an example for updating an air interface key update in a radio communication system according to Example 6.

### Preferred Embodiments of the Invention

With respect to the problem that the mode for updating an air interface key during SRNC relocation in the current HSPA+ security is not defined, the present invention puts forwards a method and a system for updating an air interface key.

The system for updating an air interface key according to the present invention comprises a serving radio network controller and a destination radio network controller.

The serving radio network controller is configured to: send key information to the destination radio network controller directly or via a core network node after deciding to perform relocation; or notify the core network node to send the key information after deciding to perform relocation;

The entity for updating keys in the above system may be a destination radio network controller, a serving radio network controller, or a core network node.

The destination radio network controller can be configured to: update keys according to the key information, and calculate to obtain updated integrity key IK_{U} and/or ciphering key CK_{U}, and receive updated integrity key IK_{U} and/or ciphering key CK_{U}.

The serving radio network controller can be configured to: send updated key information to the destination radio network controller directly or via the core network node after updating keys according to the key information.

The system for updating the air interface key may further comprise a core network node, which may be configured to: send the key information sent by the serving radio network controller and/or the key information stored per se to the destination radio network controller; or send updated key information to the destination radio network controller after updating keys according to the key information.

In the present invention, the modes for updating the ciphering key CK_{U} and/or integrity key IK_{U} may be as follows.
Mode 1:
   when there are a medium key K_{ASMEU} and an integrity key IK_{U} and/or a ciphering key CK_{U} at the source RNC+, and when the conditions for triggering the update of air interface keys are satisfied, the user equipment and the network side perform operations of updating the key.

   The updating parameter of the ciphering key CK_{U}/integrity key IK_{U} at least include one of the following parameters or any combination thereof: a medium key K_{ASMEU}, a random number NONCE, a repeat network access counter COUNTER, a selected encryption algorithm identifier enc-alg-ID, a selected integrity algorithm identifier int-alg-ID, a frequency point UARFCN allocated to the user equipment by the destination RNC, a scrambling code allocated to the user equipment by the destination RNC, a subscriber identifier (such as the International Mobile Subscriber Identity (IMSI), the Temporary Mobile Subscriber Identity (TMSI), and the Radio Network Temporary Identifier (RNTI), and so on), a destination RNC identifier, a start (START) parameter defined in a UMTS, an integrity sequence number (COUNT-I) parameter defined in the UMTS, a radio resource control sequence number (RRC SN) parameter defined in the UMTS, and a radio link control sequence number (RLC SN) parameter defined in the UMTS.
   A plurality of examples of update formulas for the ciphering key CK_{U}/the integrity key IK_{U} will be shown below:
   (CK_{U}, IK_{U}) = F2(K_{ASMEU}, NONCE)
   or (CK_{U}, IK_{U}) = F2(K_{ASMEU}, IMSI, NONCE)
   or (CK_{U}, IK_{U}) = F2(K_{ASMEU}, UARFCN, NONCE), wherein UARFCN is the frequency point allocated to the user equipment by the destination node B
   or (CK_{U}, IK_{U}) = F2 (K_{ASMEU}, UARFCN, ScramblingCode, NONCE), wherein ScramblingCode is the scrambling code allocated to the user equipment by the destination node B, which, herein, may be an uplink scrambling code
   or (CK_{U}, IK_{U}) = F2 (K_{ASMEU}, IMSI, UARFCN, NONCE)
   or (CK_{U}, IK_{U}) = F2 (K_{ASMEU}, UARFCN)
   or (CK_{U}, IK_{U}) = F2 (K_{ASMEU}, UARFCN, ScramblingCode)
   or (CK_{U}, IK_{U}) = F2 (K_{ASMEU}, IMSI, UARFCN)
   or (CK_{U}, IK_{U}) = F2 (K_{ASMEU}, IMSI, UARFCN, ScramblingCode)
   or CK_{U} = F2 (K_{ASMEU}, enc-alg-ID, NONCE), IKu = F2 (K_{ASMEU}, int-alg-ID, NOCNE).
   The random number NONCE in the above derivation formulas may be generated by the source node B, or by the destination node B, or by the user equipment, or by the core network node. The random number NONCE may also be replaced by the counter COUNTER. IMSI may also be replaced by other identifiers that can indicate the identity of the terminal, such as, TMSI, or RNTI, etc.
   When the random number NONCE is generated by the destination base station, NONCE may be the FRESH parameter defined in UMTS.
   The above various formulas are only intended to be used as examples of update algorithms, and other parameters, for example the destination RNC identifier, can also be used in the process of updating the ciphering key CK_{U}/integrity key IK_{U}.
Mode 2:
   if the source RNC+ only has a ciphering key CK_{U} and/or an integrity key IK_{U} but not a medium key K_{ASMEU}, and when the conditions for triggering the update of air interface keys are satisfied, the user equipment and the network side perform operations of updating keys.

The parameters for updating air interface keys may at least include one of the following parameters or any combination thereof: a ciphering key CK_{U}, an integrity key IK_{U}, a random number NONCE, a repeat network access counter COUNTER, a selected encryption algorithm identifier enc-alg-ID, a selected integrity algorithm identifier int-alg-ID, a frequency point UARFCN allocated to the user equipment by the destination RNC, a Scrambling Code allocated to the user equipment by the destination RNC, s subscriber identifier (such as IMSI, TMSI, and RNTI, etc.), the destination RNC identifier, a start parameters defined in UMTS, an integrity sequence number (COUNT-I) parameter defined in UMTS, a radio resource control sequence number (RRC SN) parameter defined in UMTS, and radio link control sequence number (RLC SN) parameter defined in UMTS.

A plurality of examples of update formulas for the ciphering key CK_{U}/the integrity key IK_{U} will be shown below:
(CK_{U}, IK_{U}) = F2 (CK_{U}||IK_{U}, NONCE)
or (CK_{U}, IK_{U}) = F2 (CK_{U}||IK_{U}, IMSI, NONCE)
or (CK_{U}, IK_{U}) = F2 (CK_{U}||IK_{U}, UARFCN, NONCE), wherein UARFCN is the frequency point allocated to the user equipment by the destination node B.
or (CK_{U}, IK_{U}) = F2 (CK_{U}||IK_{U}, UARFCN, ScramblingCode, NONCE), wherein ScramblingCode is the scrambling code allocated to the user equipment by the destination node B, which, herein, may be an uplink scrambling code
or (CK_{U}, IK_{U}) = F2 (CK_{U}||IK_{U}, IMSI, UARFCN, NONCE)
or (CK_{U}, IK_{U}) = F2 (CK_{U}||IK_{U}, UARFCN)
or (CK_{U}, IK_{U}) = F2 (CK_{U}||K_{UU}, UARFCN, ScramblingCode)
or (CK_{U}, IK_{U}) = F2 (CK_{U}||K_{U}, IMSI, UARFCN)
or (CK_{U}, IK_{U}) = F2 (QK_{U}||IK_{U}, IMSI, UARFCN, ScramblingCode)
or CK_{U} = F2 (CK_{U}||IK_{U}, enc-alg-ID, NONCE), IK_{U} = F2 (CK_{U}||IK_{U}, int-alg-ID, NONCE).

The random number NONCE in the above derivation formulas may be generated by the source node B, or by the destination node B, or by the user equipment, or by the core network node. The random number NONCE may also be replaced by the counter COUNTER. IMSI may also be replaced by other identifiers that can indicate the identity of the terminal, such as, TMSI, or RNTI, etc.

When the random number NONCE is generated by the destination base station, NONCE may be the FRESH parameter defined in UMTS.

The above various formulas are only intended to be used as examples of update algorithms, and other parameters, for example the destination RNC identifier, can also be used in the process of updating the ciphering key CK_{U}/integrity key IK_{U}.

In the present invention, the method for updating an air interface key comprises:
after a serving radio network controller making a decision to implement relocation, the serving radio network controller sending key information to a destination radio network controller directly or via a core network node; or the serving radio network controller notifying the core network node to send the key information to the destination radio network controller.

In the present invention, the entity for updating keys may be a destination radio network controller, which updates keys according to the received key information and calculates to obtain the updated integrity key IK_{U} and/or ciphering key CK_{U}. The destination radio network controller receives the key information directly from the serving radio network controller or the core network.

The entity for updating keys may also be a serving radio network controller, which sends updated key information to the destination radio network controller directly or via the core network node after updating keys according to the key information.

The entity for updating keys may also be a core network node, which sends updated key information to the destination radio network controller after updating keys according to the key information. The core network can obtain the key information from the serving radio network controller or other entities, or the key information is generated or determined by the core network according to system settings.

The key information at least includes one of the following parameters or any combination thereof: a medium key K_{ASMEU}, a ciphering key CK_{U}, and an integrity key IK_{U}. The key information may also include update parameters which require using in the above Mode 1 and Mode 2.

The present invention will be described in detail with reference to the drawings and the examples. It should be pointed out that examples of the present invention and the features in different examples can be combined in any way provided that they are not conflicting to each other.

### Example 1:

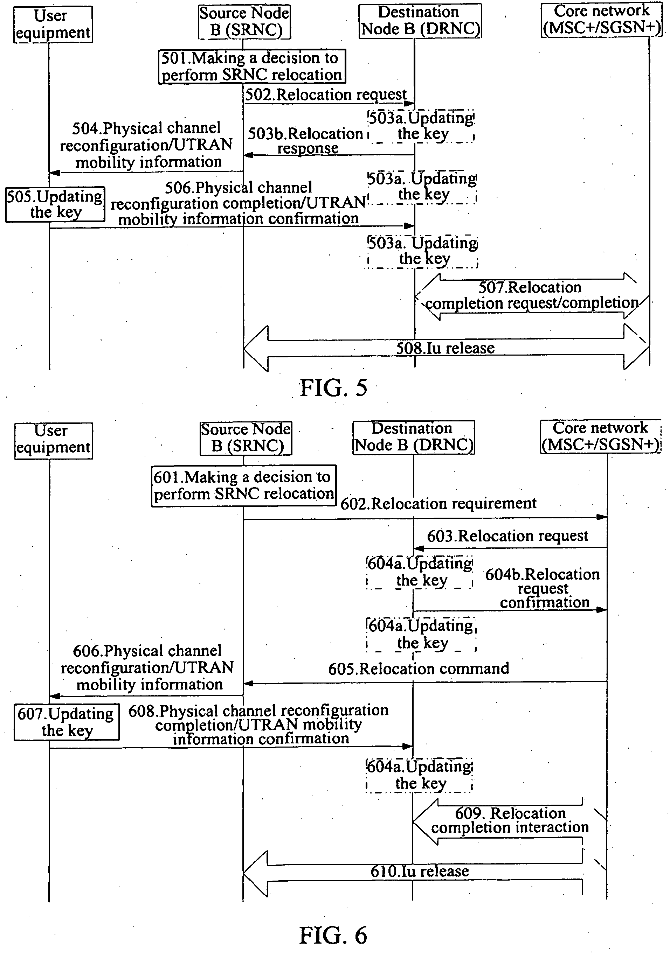

This example describes an example of a user updating an air interface key during the process of SRNC relocation, as shown in FIG. 5. In this example, the flattened Node B+ is regarded as an evolved RNC, and this process uses an enhanced SRNC relocation process, i.e., the source RNC and the destination RNC directly communicate with each other, without transfer of the core network node CNN+. The steps will be described as follows.

Step 501, the SRNC makes a decision to perform SRNC relocation. Triggering of this decision may be: receiving a measurement report of the user equipment, or receiving an uplink signaling transmission indication sent by the destination RNC of requiring performing cell update or UMTS Registration Area (URA) update, and so on.

Step 502, the SRNC sends a relocation request message, which includes the key information of the user equipment, to the destination RNC. The key information at least includes one of the following parameters or any combination thereof: a ciphering key CKu, an integrity key IKu, a medium key K_{ASMEU}, an encryption algorithm supported by a user, an integrity algorithm supported by the user, a selected encryption algorithm, a selected integrity algorithm, a repeat network access counter COUNTER maintained by the SRNC, and a random number NONCE_{NB+} generated by the SRNC.

Step 503a, the destination RNC updates the air interface key of the user equipment according to the received key information, and/or related parameters in the update process.

This step may be performed before step 503b or after 503b. If the key update parameters need certain parameters sent by the user equipment, for example, the random number NONCE_{UE+} generated by the user equipment side, then this step is performed after step 506b.

If the materials for updating the air interface key include a repeat network access counter COUNTER, then the destination RNC updates the air interface key of the user equipment: the medium key K_{ASMEU}, and/or the integrity key IK_{U}, and/or the ciphering key CK_{U} according to the received COUNTER value, and/or related parameters in the update process,.

If the materials for updating the air interface key include the random number NONCE_{NB+} generated by the SRNC or the destination RNC, then the destination RNC updates the air interface key of the user equipment: the medium key K_{ASMEU}, and/or the integrity key IK_{U}, and/or the ciphering key CK_{U} according to the random number, and/or related parameters in the update process,.

The parameters for updating the air interface key may further include one of the following parameters or any combination thereof: the frequency point UARFCN allocated to the user equipment by the destination RNC, and/or the ScramblingCode, subscriber identifier (such as IMSI, TMSI, and Radio Network Temporary Identifier (RNTI), etc.), the destination RNC identifier, the selected encryption algorithm identifier enc-alg-ID, the selected integrity algorithm identifier int-alg-ID, the start (START) parameter defined in UMTS, the integrity sequence number (COUNT-I) parameter defined in UMTS, the radio resource control sequence number (RRC SN) parameter defined in UMTS, and radio link control sequence number (RLC SN) parameter defined in UMTS.

Step 503b, the destination RNC allocates resources to the user, and sends a relocation response message, which optionally includes: the selected integrity algorithm, and/or the selected encryption algorithm, to the SRNC. If the materials for updating the air interface key include the random number NONCE_{NB+} generated by the SRNC (destination RNC), then the relocation response message includes this random number.

Step 504, the SRNC sends a physical channel reconfiguration message or a UTRAN mobility information message to the user equipment. If the materials for updating the air interface key include the random number NONCENB+ generated by the SRNC (destination RNC), then the message needs to include the random number.

Step 505, the user equipment updating the air interface key.

If the materials for updating the air interface key include the repeat network access counter COUNTER, then the user equipment progressively increases the value of the repeat network access counter COUNTER maintained by itself by 1, and updates the air interface keys, namely, the medium key K_{ASMEU}, and/or the integrity key IK_{U}, and/or the ciphering key CK_{U}, according to the progressively increased COUNTER value and/or related parameters in the update process.

If the materials for updating the air interface key include the random number NONCE_{NB+} generated by the SRNC or the destination RNC, and/or the random number NONCE_{UE+} generated by the user equipment, then the user equipment updates the air interface key of the user equipment, namely, the medium key K_{ASMEU}, and/or integrity key IK_{U}, and/or ciphering key CK_{U}, according to the random numbers NONCE_{NB+} and/or NONCE_{UE+}, and/or related parameters in the update process.

The parameters for updating the air interface key may further include one of the following parameters or any combination thereof: the frequency point UARFCN allocated to the user equipment by the destination RNC, and/or the ScramblingCode, the subscriber identifier (such as IMSI, TMSI, or RNTI, etc.), the destination RNC identifier, the selected encryption algorithm identifier enc-alg-ID, the selected integrity algorithm identifier int-alg-ID, the start (START) parameter defined in UMTS, the integrity sequence number (COUNT-I) parameter defined in UMTS, the radio resource control sequence number (RRC SN) parameter defined in UMTS, and the radio link control sequence number (RLC SN) parameter defined in UMTS.

Step 506, when a RRC connection has been established between the user equipment and the destination RNC, the user equipment sends a physical channel reconfiguration completion message or a UTRAN mobility information confirmation message to the destination RNC after the destination RNC allocating necessary radio resources to the user equipment, wherein integrity protection is performed on the message using updated integrity key IK_{U}, or both integrity protection and encryption protection are performed on the message using updated integrity key IK_{U} and ciphering key CK_{U} simultaneously.

If the materials for updating the air interface key include the repeat network access counter COUNTER, then the message may optionally include the following parameters: the value of the repeat network access counter maintained by the user equipment side, or n LSBs (Least Significance Bit) of the value of the repeat network access counter maintained by the user equipment side, wherein n may be any positive integer.

If the materials for updating the air interface key include the random number NONCE_{UE+} generated by the user equipment, then the message includes this random number NONCE_{UE+}.

Step 507, after the destination RNC receives the physical channel reconfiguration completion message or the UTRAN mobility information confirmation message sent by the user equipment, if the air interface key has not been updated yet, now the destination RNC firstly performs the operation of updating the air interface key; if the air interface key has already been updated, then the destination RNC performs security verification on the message using updated integrity key IK_{U} and/or ciphering key CK_{U}.

If the materials for updating the air interface key include the repeat network access counter COUNTER, this step may further comprise an operation of synchronizing the counter values maintained by the network side and the user equipment side respectively. The synchronization scheme comprises: the destination RNC comparing the value of the repeat network access counter COUNTER maintained by itself with the value of the repeat network access counter COUNTER received from the user equipment. If they are equal, then the destination RNC directly performs security verification on the physical channel reconfiguration completion message or the UTRAN mobility information completion message; if the value of the repeat network access counter COUNTER received from the user equipment is larger than the value of the repeat network access counter COUNTER maintained by the destination RNC itself, then the destination RNC substitutes the value of the repeat network access counter COUNTER received from the user equipment for the value of the repeat network access counter COUNTER stored per se, and updates the air interface key, and then performs verification on the received message; if the value of the repeat network access counter COUNTER received from the user equipment is smaller than the value of the repeat network access counter COUNTER maintained by the destination RNC itself, then verification will not be successful, and the destination RNC may operate according to the operator's policy, for exmaple, notify the user equipment to perform the repeat network access.

If the destination RNC successfully verifies the physical channel reconfiguration completion message or the UTRAN mobility information confirmation message, then the destination RNC and the core network node (SGSN+ or a Mobile Switching Center/Visitor Location Register + (MSC/VLR+)) performs the message interaction to notify the core network SRNC of the completion of SRNC relocation.

If the materials for updating the air interface key include the repeat network access counter COUNTER, then the destination RNC progressively increases the value of the repeat network access counter maintained by itself by 1 and stores the value. This value will be used in the next handover.

Step 508, the core network (SGSN+ or MSC/VLR+) releases the Iu interface with the source RNC.

In this example, if the materials for updating the air interface key include a random number and this random number NONCE is generated by the destination RNC, then NONCE may be the FRESH parameter defined in the UMTS.

### Example 2:

This example is almost the same with Example 1, except in that the update of the key is implemented by the SRNC. After completing the update of the key, the SRNC sends updated key information to the destination RNC through a relocation request message in step 502. The key information at least includes one of the following parameters or any combination thereof: an updated ciphering key CK_{U}, an updated integrity key IK_{U}, an updated medium key K_{ASMEU}, an encryption algorithm supported by a user, an integrity algorithm supported by the user, a selected encryption algorithm, and a selected integrity algorithm, a repeat network access counter COUNTER maintained by the SRNC, and a random number NONCE_{NB+} generated by the SRNC. In this scheme, the message sent in step 506 does not include the random number generated by the user equipment.

### Example 3:

This example illustrates another example of SRNC relocation. In this example, message interaction between the SRNC and the destination RNC needs the transfer of the core network node CNN+ (SGSN+ or MSC/VLR+), as shown in FIG. 6. The steps will be described as follows.

Step 601, the SRNC makes a decision to perform SRNC relocation. Triggering of this decision may be: receiving a measurement report of the user equipment, or receiving an uplink signaling transmission indication sent by the destination RNC of requiring performing cell update or URA update, and so on.

Step 602, the SRNC sends a relocation requirement message to the core network. If the SRNC is connected to two CNN+ nodes (a SGSN+ and a MSC/VLR+) at the same time, then the SRNC sends the relocation requirement message to both of the two CNN+ nodes at the same time. If the source RNC and the destination RNC are located under two different CNN+ nodes (SGSN+ and/or MSC/VLR+), then the message needs to be transferred by the two CNN+ nodes. The message optionally includes one of the following parameters or any combination thereof: a ciphering key CK_{U}, an integrity key IK_{U}, a medium key K_{ASMEU}, an encryption algorithm supported by the user, an integrity algorithm supported by the user, a selected encryption algorithm, and a selected integrity algorithm.

If the parameters for updating the air interface key include a repeat network access counter COUNTER, then the message includes the repeat network access counter COUNTER.

If the parameters for updating the air interface key include a random number NONCE_{NB+} generated by the SRNC, then the message includes the random number.

Step 603, the core network sends a relocation request message to the destination RNC, wherein the message at least includes one of the following parameters or any combination thereof: a ciphering key CK_{U}, an integrity key IK_{U}, a medium key K_{ASMEU}, an encryption algorithm supported by the user, an integrity algorithm supported by the user, a selected encryption algorithm, and a selected integrity algorithm.

If the parameters for updating the air interface keys include a repeat network access counter COUNTER, then the message includes the repeat network access counter COUNTER sent by the SRNC and received by the CNN+.

If the parameters for updating the air interface key include the random number NONCE_{NB+} generated by the SRNC, then the message includes the random number NONCE_{NB+} sent by the SRNC and received by the CNN+. If the parameters for updating the air interface key include the random number NONCE_{CNN+} generated by the CNN+, then the message includes the random number NONCE_{CNN+}.

Step 604a, the destination RNC updates the air interface key of the user equipment according to the received key information, and/or related parameters in the update process. This step may be performed before step 604b or after 604b. If the key update parameters need certain parameters sent by the user equipment, for example, the random number NONCE_{UE+} generated by the user equipment side, then this step may also be performed after step 608.

If the materials for updating the air interface keys include a repeat network access counter COUNTER, then the destination RNC updates the air interface key of the user equipment: the medium key K_{ASMEU}, and/or the integrity key IK_{U}, and/or the ciphering key CK_{U} according to the received COUNTER value, and/or related parameters in the update process.

If the materials for updating the air interface key include the random number NONCE_{NB+} generated by the SRNC or the destination RNC or the random number NONCE_{CNN+} generated by the CNN+, then the destination RNC updates the air interface key of the user equipment: the medium key K_{ASMEU}, and/or the integrity key IK_{U}, and/or the ciphering key CKu according to the random number, and/or related parameters in the update process,.

The parameters for updating the air interface key may further include one of the following related parameters in the update process or any combination thereof: the frequency point UARFCN allocated to the user equipment by the destination RNC, and/or the ScramblingCode, subscriber identifier (such as IMSI, TMSI, and Radio Network Temporary Identifier (RNTI), etc.), the destination RNC identifier, the selected encryption algorithm identifier enc-alg-ID, the selected integrity algorithm identifier int-alg-ID, the start (START) parameter defined in UMTS, the integrity sequence number (COUNT-I) parameter defined in UMTS, the radio resource control sequence number (RRC SN) parameter defined in UMTS, and radio link control sequence number (RLC SN) parameter defined in UMTS.

Step 604b, the destination RNC sends a relocation request confirmation message, which optionally includes the following parameters: a selected integrity algorithm, and/or a selected encryption algorithm, to the core network. Before sending this message, this example may comprises the destination RNC and the core network establishing a new Iu bearer, and allocating resources such as RRC connection resources and radio link and so on to the user equipment. If the source RNC and the destination RNC are located under two different CNN+ nodes (SGSN+ and/or MSC/VLR+), then the message needs to be transferred by the two CNN+ nodes.

Step 605, the core network sends a relocation command message, which optionally includes the following parameters: a selected integrity algorithm and/or a selected encryption algorithm, to the SRNC. If the parameters for updating the air interface key include the random number NONCE_{NB+} generated by the SRNC or the destination RNC and/or the random number NONCE_{CNN+} generated by the SGSN+ or MSC/VLR+, then the message includes this random number.

Step 606, the SRNC sends a physical channel reconfiguration message or a UTRAN mobility information message, which optionally includes the following parameters: a selected integrity algorithm and/or a selected encryption algorithm, to the user equipment. If the materials for updating the air interface key include the random number NONCE_{NB+} generated by the SRNC or the destination RNC or the random number NONCE_{CNN+} generated by the SGSN+ or MSC/VLR+, then the message needs to include the random number.

Step 607, the user equipment updates the air interface key.

If the materials for updating the air interface key include the repeat network access counter COUNTER, then the user equipment progressively increases the value of the repeat network access counter COUNTER maintained by itself by 1, and updates the air interface key, namely, the medium key KASMEU, and/or the integrity key IK_{U,} and/or the ciphering key CK_{U} according to the progressively increased COUNTER value and/or related parameters in the update process.

If the materials for updating the air interface key include the random number NONCE_{NB+} generated by the SRNC or the destination RNC and/or the random number NONCE_{CNN+} generated by the SGSN+ or MSC/VLR+, and/or the random number NONCE_{UE+} generated by the user equipment, then the user equipment updates the air interface key, namely, the medium key K_{ASMEU}, and/or the integrity key IKu, and/or the ciphering key CK_{U}, according to the random number(s) NONCE_{NB+} and/or NONCE_{CNN+} and/or NONCE_{UE+}.

The parameters for updating the air interface key may further include one of the following parameters or any combination thereof: the frequency point UARFCN allocated to the user equipment by the destination RNC, and/or the ScramblingCode, the subscriber identifier (such as IMSI, TMSI, and Radio Network Temporary Identifier (RNTI), etc.), the destination RNC identifier, the selected encryption algorithm identifier enc-alg-ID, the selected integrity algorithm identifier int-alg-ID, the start (START) parameters defined in UMTS, the integrity sequence number (COUNT-I) parameter defined in UMTS, the radio resource control sequence number (RRC SN) parameter defined in UMTS, and the radio link control sequence number (RLC SN) parameter defined in UMTS.

Step 608, the user equipment sends a physical channel reconfiguration completion message or a UTRAN mobility information confirmation message to the destination RNC, wherein integrity protection is performed on the message using the updated integrity key IKu, or both integrity protection and encryption protection are performed on the message using updated integrity key IKu and ciphering key CKu simultaneously.

If the materials for updating the air interface key include the repeat network access counter COUNTER, then the message may optionally include the following parameters: the value of the repeat network access counter maintained by the user equipment side, or n LSBs (Least Significance Bit) of the value of the repeat network access counter maintained by the user equipment side, wherein n may be any positive integer.

If the materials for updating the air interface key include the random number NONCE_{UE+} generated by the user equipment, then the message includes this random number NONCE_{UE+}.

Step 609, after the destination RNC receives the UTRAN mobility information confirmation message or the physical channel reconfiguration completion message sent by the user equipment, if the air interface key has not been updated yet, now the destination RNC firstly performs the operation of updating the air interface key; if the air interface key has already been updated, then the destination RNC performs security verification on the message using updated integrity key IKu and/or ciphering key CKu.

If the materials for updating the air interface key include the repeat network access counter COUNTER, this step may further include an operation of synchronizing the counter values maintained by the network side and the user equipment side respectively. The synchronization scheme comprises: the destination RNC comparing the value of the repeat network access counter COUNTER maintained by itself with the value of the repeat network access counter COUNTER received from the user equipment. If they are equal, then the destination RNC directly performs CMAC verification on the physical channel reconfiguration completion message or the UTRAN mobility information completion message; if the value of the repeat network access counter COUNTER received from the user equipment is larger than the value of the repeat network access counter COUNTER maintained by the destination RNC itself, then the destination RNC covers the value of the repeat network access counter COUNTER stored per se with the value of the repeat network access counter COUNTER received from the user equipment, and updates the air interface key, and then performs verification on the received message; if the value of the repeat network access counter COUNTER received from the user equipment is smaller than the value of the repeat network access counter COUNTER maintained by the destination RNC itself, then verification is unsuccessful, and the destination RNC may operate according to the operator's policy, for exmaple, notify the user equipment to perform the repeat network access.

If the destination RNC successfully verifies the message sent by the user equipment, then the destination RNC and the core network node (SGSN+ or MSC/VLR+) performs the message interaction to notify the core network SRNC of the completion of SRNC relocation. If the destination RNC is connected to two CNN+ nodes (SGSN+ and MSC/VLR+) at the same time, then the destination RNC needs to send the message to both of the two CNN+ nodes simultaneously.

If the materials for updating the air interface key include the repeat network access counter COUNTER, then the destination RNC progressively increases the value of the repeat network access counter maintained by itself by 1 and stores the value. This value will be used in the next handover.

Step 610, the core network (SGSN+ or MSC/VLR+) releases the Iu interface with the SRNC.

In this example, if the materials for updating the air interface key include a random number and this random number NONCE is generated by the destination RNC, then NONCE may be the FRESH parameter defined in the UMTS.

### Example 4:

This example is almost the same with Example 3, except in that update of the key is implemented by the SRNC. After completing the update of the key, the SRNC sends updated key to the core network node CNN+, and then the core network node CNN+ sends the updated key to the destination SRNC in step 603.

### Example 5:

This example is almost the same with Example 3, except in that the update of the key is implemented by the core network node (SGSN+ or MSC/VLR+). After completing the update of the key, the SGSN+ or MSC/VLR+ sends updated key information to the destination SRNC in step 603. The key information at least includes one of the following parameters or any combination thereof: an updated ciphering key CKu, an updated integrity key IKu, an updated medium key K_{ASMEU}, an encryption algorithm supported by a user, an integrity algorithm supported by the user, a selected encryption algorithm, a selected integrity algorithm, a repeat network access counter COUNTER maintained by the SRNC, a random number NONCE_{NB+} generated by the SRNC, and a random number NONCE_{CNN+} generated by CNN+. In this scheme, the message sent in step 608 does not include the random number generated by the user equipment.

### Example 6:

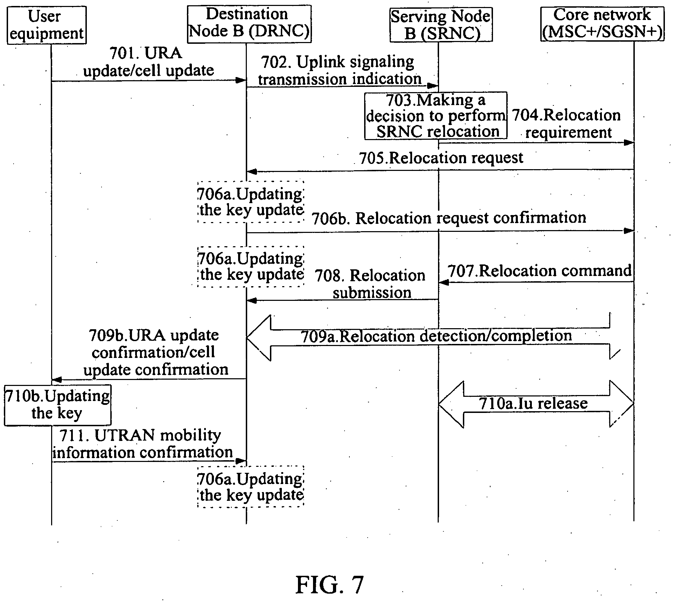

This example illustrate an example of updating the air interface key during URA update or cell update, as shown in FIG. 7. In the process of URA update or cell update, SRNC relocation is also performed simultaneously. The steps are described as follows.

Step 701, the user equipment sends a URA update message or a cell update message to the UTRAN after making a decision of the cell reselection.

Step 702, the destination RNC sends an uplink signaling transmission indication message to the SRNC of the user by receiving the URA update message or cell update message of the unknown user equipment.

Step 703, the SRNC decides to initiate the process of SRNC relocation.

Steps 704-707, SRNC relocation is performed between the SRNC and the destination RNC. This process is the same with the process in steps 602 to 605 of Example 5.

Step 708, the SRNC sends a relocation submission message to the destination RNC to request the destination RNC to continue to perform relocation.

Step 709a, the destination RNC interacts with the core network to confirm the completion of SRNC relocation.

Step 709b, the destination RNC sends a URA update confirmation message or a cell confirmation message to the user equipment. If the materials for updating the air interface key include the random number NONCE_{NB+} generated by the SRNC or destination RNC, or the random number NONCE_{CNN+} generated by the CNN+ (SGSN+ or MSC/VLR+), then the message needs to include the random number. The order of step 709a and step 709b is not specifically limited.

Step 710b, the user equipment updates the air interface key. This step is the same with step 607 of Example 5.

Step 710a, the core network (SGSN+ or MSC/VLR+) releases the Iu interface with the SRNC.

Step 711, the user equipment sends a UTRAN mobility information confirmation message to the destination RNC. This step is the same with step 608 of Example 5.

If the materials for updating the air interface key include the repeat network access counter COUNTER, then the destination RNC progressively increases the value of the repeat network access counter maintained by itself by 1 and stores the value. This value will be used in the next handover.

In this example, if the materials for updating the air interface key include a random number and this random number NONCE is generated by the destination RNC, then NONCE may be the FRESH parameter defined in the UMTS.

In the process of SRNC relocation in this example, the message interaction between the destination RNC and the SRNC may either not be transferred through the core network node (SGSN+ or MSC/VLR+).

This example further provides a radio network controller, which is configured to:
when the radio network controller is a serving radio network controller, send key information to a destination radio network controller directly or via a core network node after making a decision to perform relocation; or, notify the core network node to send the key information.

The radio network controller is further configured to:
when the radio network controller is the destination radio network controller, update a key according to the key information, and calculate to obtain updated integrity key IK_{U} and/or ciphering key CKu.

The radio network controller is further configured to:
when the radio network controller is the destination radio network controller, receive updated integrity key IK_{U} and/or ciphering key CK_{U}.

When the radio network controller is the serving radio network controller, the radio network controller is configured to send the key information to the destination radio network controller directly or via the core network node in the following mode: updating the key according to the key information, and sending updated key information to the destination radio network controller directly or via the core network node.

The key information at least includes one of the following parameters or any combination thereof: a medium key K_{ASMEU}, a ciphering key CK_{U}, and an integrity key IK_{U}.

The above examples are only preferred examples of the present invention. The scheme of the present invention is not limited to the HSPA+ system, and its related modes can be applied to other radio communication systems. For a person having ordinary skill in the art, the present invention may have various modifications and variations. Any modification, equivalent substitution and improvement made within the principle of the present invention as defined in the claims should fall into the protection scope of the present invention.

A person having ordinary skill in the art can appreciate that all of or parts of the steps of the above method may be implemented by instructing related hardware through a program, which may be stored in a computer readable storage medium, such as a read-only memory, a magnetic disk or an optical disk. Optionally, all of or parts of the steps of the above examples may also be implemented by using one or more integrated circuits. Correspondingly, each module/unit in the above examples may be implemented in the form of hardware, or in the form of software functional modules. The present invention is not limited to any particular form of combinations of hardware and software.

### Industrial Applicability

The present invention can improve the security of the system.

## Claims

1. A method for updating an air interface key, the method comprising:
after a serving radio network controller, SRNC, making (501) a decision to perform relocation,
the SRNC sending (502) air interface key information to a destination radio network controller, DRNC, directly, and the DRNC updating (503a) the air interface key according to the air interface key information and calculating to obtain an updated integrity key IK_{U} and/or ciphering key CK_{U};
wherein said air interface key information at least includes one of following parameters or any combination thereof: a medium key K_{ASMEU}, a ciphering key CK_{U}, and an integrity key IK_{U}, wherein the ciphering key CK_{U} is used to encrypt user plane data and a control plane signaling, and the integrity key IK_{U} is used to perform integrity protection on the control plane signaling,
wherein said air interface key information further includes: a repeat network access counter, and
said method further comprises:
a user equipment and the DRNC managing the repeat network access counter respectively, and initializing the repeat network access counter after successfully completing a process of Authentication and Key Agreement, or after the repeat network access counter reaches a maximum threshold,
the user equipment including the repeat network access counter value maintained by the user equipment in a physical channel reconfiguration completion message or a Universal Terrestrial Radio Access Network, UTRAN, mobility information confirmation message sent to the DRNC,
after receiving the physical channel reconfiguration completion message or the UTRAN mobility information confirmation message sent by the user equipment, the DRNC comparing the repeat network access counter value maintained by the DRNC self with the repeat network access counter value received from the user equipment, and if the two values are equal, then the DRNC directly verifying the physical channel reconfiguration completion message or the UTRAN mobility information confirmation message; if the repeat network access counter value received from the user equipment is larger than the repeat network access counter value maintained by the DRNC self, then the DRNC substituting the repeat network access counter value received from the user equipment for the repeat network access counter value maintained by the the DRNC self, updating the air interface key, and then verifying received message; if the repeat network access counter value received from the user equipment is smaller than the repeat network access counter value maintained by the DRNC self, then verification being unsuccessful, and the DRNC operating according to an operator's policy.

2. The method according to claim 1, wherein, in said step of the DRNC updating (503a) the air interface key according to the received air interface key information,
when the air interface key information includes the medium key, an entity for updating the air interface key calculates to obtain updated ciphering key and integrity key according to the medium key;
when the air interface key information does not include the medium key, the entity for updating the air interface key calculates to obtain updated ciphering key and integrity key according to un-updated ciphering key and integrity key.

3. The method according to claim 1, wherein
said air interface key information further includes one of following parameters or any combination thereof: an encryption algorithm supported by a user, an integrity algorithm supported by the user, a selected encryption algorithm, and a selected integrity algorithm;
and/or
said air interface key information further includes one of following parameters or any combination thereof: a DRNC identifier, a frequency point allocated to the user equipment by the DRNC, a scrambling code allocated to the user equipment by the DRNC, a subscriber identifier, a start parameter defined in a Universal Mobile Telecommunications System, UMTS, an integrity sequence number parameter defined in the UMTS, a radio resource control sequence number parameter defined in the UMTS, and a radio link control sequence number parameter defined in the UMTS.

4. The method according to claim 1, wherein
when updating the air interface key, the user equipment progressively increases a repeat network access counter value stored per se, and updates the air interface key according to the repeat network access counter value after progressive increase; and
the DRNC update the air interface key according to the repeat network access counter value received from the SRNC.

5. The method according to claim 1, wherein
when the air interface key information includes a random number generated by the SRNC or a random number generated by the DRNC, the DRNC updating the air interface key according to the random number, preferably, the random number generated by the SRNC or the random number generated by the DRNC is carried in a physical channel reconfiguration message or a Universal Terrestrial Radio Access Network, UTRAN, mobility information message;
or
when the air interface key information includes a random number generated by the user equipment, the user equipment updates the air interface key according to the random number generated by the user equipment, wherein the random number generated by the user equipment is carried in a physical channel reconfiguration completion message or a Universal Terrestrial Radio Access Network, UTRAN, mobility information confirmation message, and the DRNC updating the air interface key after receiving the physical channel reconfiguration completion message or the UTRAN mobility information confirmation message according to the random number generated by the user equipment;
preferably, when a random number is generated by the DRNC, the random number is a fresh parameter defined in a Universal Mobile Telecommunication System, UMTS.

6. A method for updating an air interface key, the method comprising:
after a serving radio network controller, SRNC, making (601) a decision to perform relocation,
the SRNC sending (602, 603) air interface key information to a destination radio network controller, DRNC, via a core network node, and the DRNC updating (604a) the air interface key according to the air interface key information and calculating to obtain an updated integrity key IK_{U} and/or ciphering key CK_{U};
wherein said air interface key information at least includes one of following parameters or any combination thereof: a medium key K_{ASMEU}, a ciphering key CK_{U}, and an integrity key IK_{U}, wherein the ciphering key CK_{U} is used to encrypt user plane data and a control plane signaling, and the integrity key IK_{U} is used to perform integrity protection on the control plane signaling,
wherein said air interface key information further includes: a repeat network access counter, and
said method further comprises:
a user equipment and the DRNC managing the repeat network access counter respectively, and initializing the repeat network access counter after successfully completing a process of Authentication and Key Agreement, or after the repeat network access counter reaches a maximum threshold,
the user equipment including the repeat network access counter value maintained by the user equipment in a physical channel reconfiguration completion message or a Universal Terrestrial Radio Access Network, UTRAN, mobility information confirmation message sent to the DRNC,
after receiving the physical channel reconfiguration completion message or the UTRAN mobility information confirmation message sent by the user equipment, the DRNC comparing the repeat network access counter value maintained by the DRNC self with the repeat network access counter value received from the user equipment, and if the two values are equal, then the DRNC directly verifying the physical channel reconfiguration completion message or the UTRAN mobility information confirmation message; if the repeat network access counter value received from the user equipment is larger than the repeat network access counter value maintained by the DRNC self, then the DRNC substituting the repeat network access counter value received from the user equipment for the repeat network access counter value maintained by the the DRNC self, updating the air interface key, and then verifying received message; if the repeat network access counter value received from the user equipment is smaller than the repeat network access counter value maintained by the DRNC self, then verification being unsuccessful, and the DRNC operating according to an operator's policy.

7. A system for updating an air interface key comprising a serving radio network controller, SRNC, a destination radio network controller, DRNC, a user equipment; wherein
the SRNC is configured to: send air interface key information to the DRNC directly after deciding to perform relocation;
the DRNC is configured to: update the air interface key according to the air interface key information, and calculate to obtain an updated integrity key IK_{U} and/or ciphering key CK_{U};
wherein said air interface key information at least includes one of following parameters or any combination thereof: a medium key K_{ASMEU}, a ciphering key CKu, and an integrity key IKu, wherein the ciphering key CK_{U} is used to encrypt user plane data and a control plane signaling, and the integrity key IK_{U} is used to perform integrity protection on the control plane signaling,
wherein said air interface key information further includes: a repeat network access counter,
wherein the user equipment and the DRNC are configured to manage the repeat network access counter respectively, and initialize the repeat network access counter after successfully completing a process of Authentication and Key Agreement, or after the repeat network access counter reaches a maximum threshold,
the user equipment is configured to include the repeat network access counter value maintained by the user equipment in a physical channel reconfiguration completion message or a Universal Terrestrial Radio Access Network, UTRAN, mobility information confirmation message sent to the DRNC,
the DRNC is configured to, after receiving the physical channel reconfiguration completion message or the UTRAN mobility information confirmation message sent by the user equipment, compare the repeat network access counter value maintained by the DRNC self with the repeat network access counter value received from the user equipment, and if the two values are equal, then verify the physical channel reconfiguration completion message or the UTRAN mobility information confirmation message; if the repeat network access counter value received from the user equipment is larger than the repeat network access counter value maintained by the DRNC self, then substitute the repeat network access counter value received from the user equipment for the repeat network access counter value maintained by the the DRNC self, update the air interface key, and then verify received message; if the repeat network access counter value received from the user equipment is smaller than the repeat network access counter value maintained by the DRNC self, then verification being unsuccessful, and operate according to an operator's policy.

8. A system for updating an air interface key comprising a serving radio network controller, SRNC, a destination radio network controller, DRNC, a user equipment, and a core network node; wherein
the SRNC is configured to: send air interface key information to the DRNC via the core network node after deciding to perform relocation;
the core network node is configured to: send the air interface key information sent by the SRNC to the DRNC;
the DRNC is configured to: update the air interface key according to the air interface key information, and calculate to obtain an updated integrity key IK_{U} and/or ciphering key CK_{U},
wherein said air interface key information at least includes one of following parameters or any combination thereof: a medium key K_{ASMEU}, a ciphering key CK_{U}, and an integrity key IK_{U}, wherein the ciphering key CK_{U} is used to encrypt user plane data and a control plane signaling, and the integrity key IK_{U} is used to perform integrity protection on the control plane signaling,
wherein said air interface key information further includes: a repeat network access counter,
wherein the user equipment and the DRNC are configured to manage the repeat network access counter respectively, and initialize the repeat network access counter after successfully completing a process of Authentication and Key Agreement, or after the repeat network access counter reaches a maximum threshold,
the DRNC is configured to, after receiving the physical channel reconfiguration completion message or the UTRAN mobility information confirmation message sent by the user equipment, compare the repeat network access counter value maintained by the DRNC self with the repeat network access counter value received from the user equipment, and if the two values are equal, then verify the physical channel reconfiguration completion message or the UTRAN mobility information confirmation message; if the repeat network access counter value received from the user equipment is larger than the repeat network access counter value maintained by the DRNC self, then substitute the repeat network access counter value received from the user equipment for the repeat network access counter value maintained by the the DRNC self, update the air interface key, and then verify received message; if the repeat network access counter value received from the user equipment is smaller than the repeat network access counter value maintained by the DRNC self, then verification being unsuccessful, and operate according to an operator's policy.

## Patentansprüche

1. Verfahren zur Aktualisierung eines Luftschnittstellenschlüssels, wobei das Verfahren umfasst, dass:
nachdem ein bedienender Funknetzcontroller, SRNC, eine Entscheidung zur Durchführung einer Verlegung getroffen hat (501),
der SRNC eine Luftschnittstellenschlüsselinformation direkt an einen Ziel-Funknetzcontroller, DRNC, sendet (502), und der DRNC den Luftschnittstellenschlüssel gemäß der Luftschnittstellenschlüsselinformation aktualisiert (503a) und eine Berechnung zum Erhalt eines aktualisierten Integritätsschlüssels IK_{U} und/oder Verschlüsselungsschlüssels CK_{U} durchführt;
wobei die Luftschnittstellenschlüsselinformation zumindest einen der folgenden Parameter oder eine beliebige Kombination aus diesen umfasst: eines Mediumschlüssels K_{ASMEU}, eines Verschlüsselungsschlüssels CK_{U} und eines Integritätsschlüssels IK_{U}, wobei der Verschlüsselungsschlüssel CK_{U} verwendet wird, um Benutzerebenendaten und eine Steuerungsebenensignalgebung zu verschlüsseln, und der Integritätsschlüssel IK_{U} verwendet wird, um einen Integritätsschutz hinsichtlich der Steuerungsebenensignalgebung durchzuführen,
wobei die Luftschnittstellenschlüsselinformation ferner umfasst: einen Wiederholungsnetzzugriffszähler, und
wobei das Verfahren ferner umfasst, dass:
ein Benutzergerät bzw. der DRNC den Wiederholungsnetzzugriffszähler verwaltet und den Wiederholungsnetzzugriffszähler nach einem erfolgreichen Abschluss eines Prozesses einer Authentifizierung und Schlüsselvereinbarung, oder nachdem der Wiederholungsnetzzugriffszähler einen maximalen Schwellenwert erreicht hat, initialisiert, das Benutzergerät den Wiederholungsnetzzugriffszählerwert, der durch das Benutzergerät geführt wird, in eine Nachricht eines Abschlusses einer Rekonfiguration eines physikalischen Kanals oder eine Mobilitätsinformationsbestätigungsnachricht eines universellen terrestrischen Funkzugangsnetzes, UTRAN, die an den DRNC gesendet wird, einbezieht,
nachdem die Nachricht eines Abschlusses einer Rekonfiguration eines physikalischen Kanals oder die UTRAN-Mobilitätsinformationsbestätigungsnachricht, die durch das Benutzergerät gesendet wurde, empfangen wurde, der DRNC den Wiederholungsnetzzugriffszählerwert, der durch den DRNC selbst geführt wird, mit dem Wiederholungsnetzzugriffszählerwert, der von dem Benutzergerät empfangen wird, vergleicht, und wenn die beiden Werte gleich sind, der DRNC die Nachricht eines Abschlusses einer Rekonfiguration eines physikalischen Kanals oder die UTRAN-Mobilitätsinformationsbestätigungsnachricht direkt verifiziert; wenn der Wiederholungsnetzzugriffszählerwert, der von dem Benutzergerät empfangen wird, größer als der Wiederholungsnetzzugriffszählerwert, der durch den DRNC selbst geführt wird, ist, der DRNC den Wiederholungsnetzzugriffszählerwert, der durch den DRNC selbst geführt wird, durch den Wiederholungsnetzzugriffszählerwert, der von dem Benutzergerät empfangen wird, ersetzt, den Luftschnittstellenschlüssel aktualisiert und dann die empfangene Nachricht verifiziert; wenn der Wiederholungsnetzzugriffszählerwert, der von dem Benutzergerät empfangen wird, kleiner als der Wiederholungsnetzzugriffszählerwert, der durch den DRNC selbst geführt wird, ist, eine Verifikation nicht erfolgreich ist, und der DRNC gemäß der Strategie eines Bedieners arbeitet.

2. Verfahren nach Anspruch 1,
wobei in dem Schritt, in dem der DRNC den Luftschnittstellenschlüssel gemäß der empfangenen Luftschnittstellenschlüsselinformation aktualisiert (503a),
wenn die Luftschnittstellenschlüsselinformation den Mediumschlüssel umfasst, eine Entität zur Aktualisierung des Luftschnittstellenschlüssels eine Berechnung zum Erhalt eines aktualisierten Verschlüsselungsschlüssels und Integritätsschlüssels gemäß dem Mediumschlüssel durchführt;
wenn die Luftschnittstellenschlüsselinformation den Mediumschlüssel nicht umfasst, die Entität zur Aktualisierung des Luftschnittstellenschlüssels eine Berechnung zum Erhalt eines aktualisierten Verschlüsselungsschlüssels und Integritätsschlüssels gemäß einem nicht aktualisierten Verschlüsselungsschlüssel und Integritätsschlüssel durchführt.

3. Verfahren nach Anspruch 1, wobei
die Luftschnittstellenschlüsselinformation ferner einen der folgenden Parameter oder eine beliebige Kombination aus diesen umfasst: eines durch einen Benutzer unterstützten Verschlüsselungsalgorithmus, eines durch den Benutzer unterstützten Integritätsalgorithmus, eines ausgewählten Verschlüsselungsalgorithmus und eines ausgewählten Integritätsalgorithmus;
und/oder
die Luftschnittstellenschlüsselinformation ferner einen der folgenden Parameter oder eine beliebige Kombination aus diesen umfasst: eines DRNC-Identifikators, eines dem Benutzergerät durch den DRNC zugeteilten Frequenzpunkts, eines dem Benutzergerät durch den DRNC zugeteilten Verwürfelungscodes, eines Teilnehmeridentifikators, eines in einem universellen mobilen Telekommunikationssystem, UMTS, definierten Startparameters, eines in dem UMTS definierten Integritätssequenzzahlparameters, eines in dem UMTS definierten Funkressourcensteuerungssequenzzahlparameters und eines in dem UMTS definierten Funkverbindungssteuerungssequenzzahlparameters.

4. Verfahren nach Anspruch 1, wobei
das Benutzergerät beim Aktualisieren des Luftschnittstellenschlüssels einen per se gespeicherten Wiederholungsnetzzugriffszählerwert progressiv erhöht und den Luftschnittstellenschlüssel gemäß dem Wiederholungsnetzzugriffszählerwert nach einer progressiven Erhöhung aktualisiert; und der DRNC den Luftschnittstellenschlüssel gemäß dem von dem SRNC empfangenen Wiederholungsnetzzugriffszählerwert aktualisiert.

5. Verfahren nach Anspruch 1, wobei
wenn die Luftschnittstellenschlüsselinformation eine durch den SRNC erzeugte Zufallszahl oder eine durch den DRNC erzeugte Zufallszahl umfasst, der DRNC den Luftschnittstellenschlüssel vorzugsweise gemäß der Zufallszahl aktualisiert, wobei die durch den SRNC erzeugte Zufallszahl oder die durch den DRNC erzeugte Zufallszahl in einer Nachricht einer Rekonfiguration eines physikalischen Kanals oder einer Mobilitätsinformationsnachricht eines universellen terrestrischen Funkzugangsnetzes, UTRAN, mitgeführt wird;
oder
wenn die Luftschnittstellenschlüsselinformation eine durch das Benutzergerät erzeugte Zufallszahl umfasst, das Benutzergerät den Luftschnittstellenschlüssel gemäß der durch das Benutzergerät erzeugten Zufallszahl aktualisiert, wobei die durch das Benutzergerät erzeugte Zufallszahl in einer Nachricht eines Abschlusses einer Rekonfiguration eines physikalischen Kanals oder einer Mobilitätsinformationsbestätigungsnachricht eines universellen terrestrischen Funkzugangsnetzes, UTRAN, mitgeführt wird, und der DRNC den Luftschnittstellenschlüssel nach dem Empfangen der Nachricht eines Abschlusses einer Rekonfiguration eines physikalischen Kanals oder der UTRAN-Mobilitätsinformationsbestätigungsnachricht gemäß der durch das Benutzergerät erzeugten Zufallszahl aktualisiert;
wenn eine Zufallszahl durch den DRNC erzeugt wird, die Zufallszahl vorzugsweise ein in einem universellen mobilen Telekommunikationssystem, UMTS, definierter frischer Parameter ist.

6. Verfahren zur Aktualisierung eines Luftschnittstellenschlüssels, wobei das Verfahren umfasst, dass:
nachdem ein bedienender Funknetzcontroller, SRNC, eine Entscheidung zur Durchführung einer Verlegung getroffen hat (601),
der SRNC eine Luftschnittstellenschlüsselinformation über einen Kernnetzknoten an einen Ziel-Funknetzcontroller, DRNC, sendet (602, 603), und der DRNC den Luftschnittstellenschlüssel gemäß der Luftschnittstellenschlüsselinformation aktualisiert (604a) und eine Berechnung zum Erhalt eines aktualisierten Integritätsschlüssels IK_{U} und/oder Verschlüsselungsschlüssels CK_{U} durchführt;
wobei die Luftschnittstellenschlüsselinformation zumindest einen der folgenden Parameter oder eine beliebige Kombination aus diesen umfasst: eines Mediumschlüssels K_{ASMEU}, eines Verschlüsselungsschlüssels CK_{U} und eines Integritätsschlüssels IK_{U}, wobei der Verschlüsselungsschlüssel CK_{U} verwendet wird, um Benutzerebenendaten und eine Steuerungsebenensignalgebung zu verschlüsseln, und der Integritätsschlüssel IK_{U} verwendet wird, um einen Integritätsschutz hinsichtlich der Steuerungsebenensignalgebung durchzuführen,
wobei die Luftschnittstellenschlüsselinformation ferner umfasst: einen Wiederholungsnetzzugriffszähler, und
wobei das Verfahren ferner umfasst, dass:
ein Benutzergerät bzw. der DRNC den Wiederholungsnetzzugriffszähler verwaltet und den Wiederholungsnetzzugriffszähler nach einem erfolgreichen Abschluss eines Prozesses einer Authentifizierung und Schlüsselvereinbarung, oder nachdem der Wiederholungsnetzzugriffszähler einen maximalen Schwellenwert erreicht hat, initialisiert,
das Benutzergerät den Wiederholungsnetzzugriffszählerwert, der durch das Benutzergerät geführt wird, in eine Nachricht eines Abschlusses einer Rekonfiguration eines physikalischen Kanals oder eine Mobilitätsinformationsbestätigungsnachricht eines universellen terrestrischen Funkzugangsnetzes, UTRAN, die an den DRNC gesendet wird, einbezieht,
nachdem die Nachricht eines Abschlusses einer Rekonfiguration eines physikalischen Kanals oder die UTRAN-Mobilitätsinformationsbestätigungsnachricht, die durch das Benutzergerät gesendet wurde, empfangen wurde, der DRNC den Wiederholungsnetzzugriffszählerwert, der durch den DRNC selbst geführt wird, mit dem Wiederholungsnetzzugriffszählerwert, der von dem Benutzergerät empfangen wird, vergleicht, und wenn die beiden Werte gleich sind, der DRNC die Nachricht eines Abschlusses einer Rekonfiguration eines physikalischen Kanals oder die UTRAN-Mobilitätsinformationsbestätigungsnachricht direkt verifiziert; wenn der Wiederholungsnetzzugriffszählerwert, der von dem Benutzergerät empfangen wird, größer als der Wiederholungsnetzzugriffszählerwert, der durch den DRNC selbst geführt wird, ist, der DRNC den Wiederholungsnetzzugriffszählerwert, der durch den DRNC selbst geführt wird, durch den Wiederholungsnetzzugriffszählerwert, der von dem Benutzergerät empfangen wird, ersetzt, den Luftschnittstellenschlüssel aktualisiert und dann die empfangene Nachricht verifiziert; wenn der Wiederholungsnetzzugriffszählerwert, der von dem Benutzergerät empfangen wird, kleiner als der Wiederholungsnetzzugriffszählerwert, der durch den DRNC selbst geführt wird, ist, eine Verifikation nicht erfolgreich ist, und der DRNC gemäß der Strategie eines Bedieners arbeitet.

7. System zur Aktualisierung eines Luftschnittstellenschlüssels, umfassend einen bedienenden Funknetzcontroller, SRNC, einen Ziel-Funknetzcontroller, DRNC, ein Benutzergerät; wobei
der SRNC ausgestaltet ist, um: eine Luftschnittstellenschlüsselinformation direkt an den DRNC zu senden, nachdem entschieden wurde, eine Verlegung durchzuführen;
der DRNC ausgestaltet ist, um: den Luftschnittstellenschlüssel gemäß der Luftschnittstellenschlüsselinformation zu aktualisieren, und eine Berechnung zum Erhalt eines aktualisierten Integritätsschlüssels IK_{U} und/oder Verschlüsselungsschlüssels CK_{U} durchzuführen;
wobei die Luftschnittstellenschlüsselinformation zumindest einen der folgenden Parameter oder eine beliebige Kombination aus diesen umfasst: eines Mediumschlüssels K_{ASMEU}, eines Verschlüsselungsschlüssels CK_{U} und eines Integritätsschlüssels IK_{U}, wobei der Verschlüsselungsschlüssel CK_{U} verwendet wird, um Benutzerebenendaten und eine Steuerungsebenensignalgebung zu verschlüsseln, und der Integritätsschlüssel IK_{U} verwendet wird, um einen Integritätsschutz hinsichtlich der Steuerungsebenensignalgebung durchzuführen,
wobei die Luftschnittstellenschlüsselinformation ferner umfasst: einen Wiederholungsnetzzugriffszähler,
wobei das Benutzergerät bzw. der DRNC ausgestaltet sind, um den Wiederholungsnetzzugriffszähler zu verwalten und den Wiederholungsnetzzugriffszähler nach einem erfolgreichen Abschluss eines Prozesses einer Authentifizierung und Schlüsselvereinbarung, oder nachdem der Wiederholungsnetzzugriffszähler einen maximalen Schwellenwert erreicht hat, zu initialisieren,
das Benutzergerät ausgestaltet ist, um den Wiederholungsnetzzugriffszählerwert, der durch das Benutzergerät geführt wird, in eine Nachricht eines Abschlusses einer Rekonfiguration eines physikalischen Kanals oder eine Mobilitätsinformationsbestätigungsnachricht eines universellen terrestrischen Funkzugangsnetzes, UTRAN, die an den DRNC gesendet wird, einzubeziehen,
der DRNC ausgestaltet ist, um, nachdem die Nachricht eines Abschlusses einer Rekonfiguration eines physikalischen Kanals oder die UTRAN-Mobilitätsinformationsbestätigungsnachricht, die durch das Benutzergerät gesendet wurde, empfangen wurde, den Wiederholungsnetzzugriffszählerwert, der durch den DRNC selbst geführt wird, mit dem Wiederholungsnetzzugriffszählerwert, der von dem Benutzergerät empfangen wird, zu vergleichen, und wenn die beiden Werte gleich sind, die Nachricht eines Abschlusses einer Rekonfiguration eines physikalischen Kanals oder die UTRAN-Mobilitätsinformationsbestätigungsnachricht zu verifizieren; wenn der Wiederholungsnetzzugriffszählerwert, der von dem Benutzergerät empfangen wird, größer als der Wiederholungsnetzzugriffszählerwert, der durch den DRNC selbst geführt wird, ist, den Wiederholungsnetzzugriffszählerwert, der durch den DRNC selbst geführt wird, durch den Wiederholungsnetzzugriffszählerwert, der von dem Benutzergerät empfangen wird, zu ersetzen, den Luftschnittstellenschlüssel zu aktualisieren und dann die empfangene Nachricht zu verifizieren; wenn der Wiederholungsnetzzugriffszählerwert, der von dem Benutzergerät empfangen wird, kleiner als der Wiederholungsnetzzugriffszählerwert, der durch den DRNC selbst geführt wird, ist, dann eine Verifikation nicht erfolgreich ist, und gemäß der Strategie eines Bedieners gearbeitet wird.

8. System zur Aktualisierung eines Luftschnittstellenschlüssels, umfassend einen bedienenden Funknetzcontroller, SRNC, einen Ziel-Funknetzcontroller, DRNC, ein Benutzergerät und einen Kernnetzknoten; wobei
der SRNC ausgestaltet ist, um: eine Luftschnittstellenschlüsselinformation über den Kernnetzknoten an den DRNC zu senden, nachdem entschieden wurde, eine Verlegung durchzuführen;
der Kernnetzknoten ausgestaltet ist, um: die durch den SRNC gesendete Luftschnittstellenschlüsselinformation an den DRNC zu senden;
der DRNC ausgestaltet ist, um: den Luftschnittstellenschlüssel gemäß der Luftschnittstellenschlüsselinformation zu aktualisieren, und eine Berechnung zum Erhalt eines aktualisierten Integritätsschlüssels IK_{U} und/oder Verschlüsselungsschlüssels CK_{U} durchzuführen,
wobei die Luftschnittstellenschlüsselinformation zumindest einen der folgenden Parameter oder eine beliebige Kombination aus diesen umfasst: eines Mediumschlüssels K_{ASMEU}, eines Verschlüsselungsschlüssels CK_{U} und eines Integritätsschlüssels IK_{U}, wobei der Verschlüsselungsschlüssel CK_{U} verwendet wird, um Benutzerebenendaten und eine Steuerungsebenensignalgebung zu verschlüsseln, und der Integritätsschlüssel IK_{U} verwendet wird, um einen Integritätsschutz hinsichtlich der Steuerungsebenensignalgebung durchzuführen,
wobei die Luftschnittstellenschlüsselinformation femer umfasst: einen Wiederholungsnetzzugriffszähler,
wobei das Benutzergerät bzw. der DRNC ausgestaltet sind, um den Wiederholungsnetzzugriffszähler zu verwalten und den Wiederholungsnetzzugriffszähler nach einem erfolgreichen Abschluss eines Prozesses einer Authentifizierung und Schlüsselvereinbarung, oder nachdem der Wiederholungsnetzzugriffszähler einen maximalen Schwellenwert erreicht hat, zu initialisieren,
der DRNC ausgestaltet ist, um, nachdem die Nachricht eines Abschlusses einer Rekonfiguration eines physikalischen Kanals oder die UTRAN-Mobilitätsinformationsbestätigungsnachricht, die durch das Benutzergerät gesendet wurde, empfangen wurde, den Wiederholungsnetzzugriffszählerwert, der durch den DRNC selbst geführt wird, mit dem Wiederholungsnetzzugriffszählerwert, der von dem Benutzergerät empfangen wird, zu vergleichen, und wenn die beiden Werte gleich sind, die Nachricht eines Abschlusses einer Rekonfiguration eines physikalischen Kanals oder die UTRAN-Mobilitätsinformationsbestätigungsnachricht zu verifizieren; wenn der Wiederholungsnetzzugriffszählerwert, der von dem Benutzergerät empfangen wird, größer als der Wiederholungsnetzzugriffszählerwert, der durch den DRNC selbst geführt wird, ist, den Wiederholungsnetzzugriffszählerwert, der durch den DRNC selbst geführt wird, durch den Wiederholungsnetzzugriffszählerwert, der von dem Benutzergerät empfangen wird, zu ersetzen, den Luftschnittstellenschlüssel zu aktualisieren und dann die empfangene Nachricht zu verifizieren; wenn der Wiederholungsnetzzugriffszählerwert, der von dem Benutzergerät empfangen wird, kleiner als der Wiederholungsnetzzugriffszählerwert, der durch den DRNC selbst geführt wird, ist, dann eine Verifikation nicht erfolgreich ist, und gemäß der Strategie eines Bedieners gearbeitet wird.

## Revendications

1. Procédé de mise à jour d'une clé d'interface radio, le procédé comprenant le fait :
d'envoyer (502) par le biais d'un contrôleur de réseau radio de desserte, SRNC, après que le SRNC a pris (501) une décision pour effectuer une translation, des informations de clé d'interface radio à un contrôleur de réseau radio de destination, DRNC, directement, et de mettre à jour (503a) par le biais du DRNC, la clé d'interface radio en fonction des informations de clé d'interface radio et d'effectuer un calcul afin d'obtenir une clé d'intégrité IK_{U} et/ou une clé de chiffrement CK_{U} mise (s) à jour ;
dans lequel lesdites informations de clé d'interface radio comportent au moins l'un des paramètres suivants ou une combinaison quelconque de ceux-ci : une clé intermédiaire K_{ASMEU}, une clé de chiffrement CK_{U} et une clé d'intégrité IK_{U}, où la clé de chiffrement CK_{U} est utilisée pour crypter des données de plan utilisateur et une signalisation de plan de commande et la clé d'intégrité IK_{U} est utilisée pour effectuer la protection d'intégrité sur la signalisation de plan de commande,
dans lequel lesdites informations de clé d'interface radio comportent en outre : un compteur de répétition d'accès au réseau, et
ledit procédé comprend en outre le fait :
de gérer, par le biais d'un équipement utilisateur et du DRNC, le compteur de répétition d'accès au réseau respectivement, et d'initialiser le compteur de répétition d'accès au réseau après avoir terminé avec succès un processus d'Authentification et d'Accord-Clé, ou après que le compteur de répétition d'accès au réseau a atteint un seuil maximal,
d'inclure, par le biais de l'équipement utilisateur, la valeur de compteur de répétition d'accès au réseau maintenue par l'équipement utilisateur dans un message d'achèvement de reconfiguration de canal physique ou dans un message de confirmation d'informations de mobilité de Réseau d'Accès Radio Terrestre Universel, UTRAN, envoyé au DRNC,
de comparer par le biais du DRNC, après la réception du message d'achèvement de reconfiguration de canal physique ou du message de confirmation d'informations de mobilité UTRAN envoyé par l'équipement utilisateur, la valeur de compteur de répétition d'accès au réseau maintenue par le DRNC lui-même à la valeur de compteur de répétition d'accès au réseau reçue à partir de l'équipement utilisateur, et si les deux valeurs sont égales, le DRNC vérifie alors directement le message d'achèvement de reconfiguration de canal physique ou le message de confirmation d'informations de mobilité UTRAN ; si la valeur de compteur de répétition d'accès au réseau reçue à partir de l'équipement utilisateur est supérieure à la valeur de compteur de répétition d'accès au réseau maintenue par le DRNC lui-même, le DRNC remplace alors la valeur de compteur de répétition d'accès au réseau reçue à partir de l'équipement utilisateur par la valeur de compteur de répétition d'accès au réseau maintenue par le DRNC lui-même, met à jour la clé d'interface radio, et puis vérifie le message reçu ; si la valeur de compteur de répétition d'accès au réseau reçue à partir de l'équipement utilisateur est inférieure à la valeur de compteur de répétition d'accès au réseau maintenue par le DRNC lui-même, alors la vérification étant non réussie, et le DRNC fonctionne conformément à une politique de l'opérateur.

2. Procédé selon la revendication 1, dans lequel, dans ladite étape consistant à mettre à jour (503a), par le biais du DRNC, la clé d'interface radio en fonction des informations de clé d'interface radio reçues,
lorsque les informations de clé d'interface radio comportent la clé intermédiaire, une entité de mise à jour de la clé d'interface radio effectue un calcul afin d'obtenir une clé de chiffrement et une clé d'intégrité mises à jour en fonction de la clé intermédiaire ;
lorsque les informations de clé d'interface radio ne comportent pas la clé intermédiaire, l'entité de mise à jour de la clé d'interface radio effectue un calcul afin d'obtenir une clé de chiffrement et une clé d'intégrité mises à jour en fonction d'une clé de chiffrement et d'une clé d'intégrité non-mises à jour.

3. Procédé selon la revendication 1, dans lequel lesdites informations de clé d'interface radio comportent en outre l'un des paramètres suivants ou une combinaison quelconque de ceux-ci : un algorithme de cryptage pris en charge par un utilisateur, un algorithme d'intégrité pris en charge par l'utilisateur, un algorithme de cryptage sélectionné, et un algorithme d'intégrité sélectionné ;
et/ou
lesdites informations de clé d'interface radio comportent en outre l'un des paramètres suivants ou une combinaison quelconque de ceux-ci : un identificateur de DRNC, un point de fréquence attribué à l'équipement utilisateur par le DRNC, un code de brouillage attribué à l'équipement utilisateur par le DRNC, un identificateur d'abonné, un paramètre de début défini dans un Système Universel de Télécommunications Mobiles, UMTS, un paramètre de numéro de séquence d'intégrité défini dans l'UMTS, un paramètre de numéro de séquence de commande de ressource radio défini dans l'UMTS, et un paramètre de numéro de séquence de commande de liaison radio défini dans l'UMTS.

4. Procédé selon la revendication 1, dans lequel
lors de la mise à jour de la clé d'interface radio, l'équipement utilisateur augmente progressivement une valeur de compteur de répétition d'accès au réseau stockée en tant que telle, et met à jour la clé d'interface radio en fonction de la valeur de compteur de répétition d'accès au réseau après l'augmentation progressive ; et
le DRNC met à jour la clé d'interface radio en fonction de la valeur de compteur de répétition d'accès au réseau reçue à partir du SRNC.

5. Procédé selon la revendication 1, dans lequel lorsque les informations de clé d'interface radio comportent un numéro aléatoire généré par le SRNC ou un numéro aléatoire généré par le DRNC, le DRNC met à jour la clé d'interface radio en fonction du numéro aléatoire, de préférence, le numéro aléatoire généré par le SRNC ou le numéro aléatoire généré par le DRNC est transporté dans un message de reconfiguration de canal physique ou dans un message d'informations de mobilité de Réseau d'Accès Radio Terrestre Universel, UTRAN ;
ou
lorsque les informations de clé d'interface radio comportent un numéro aléatoire généré par l'équipement utilisateur, l'équipement utilisateur met à jour la clé d'interface radio en fonction du numéro aléatoire généré par l'équipement utilisateur, où le numéro aléatoire généré par l'équipement utilisateur est transporté dans un message d'achèvement de reconfiguration de canal physique ou dans un message de confirmation d'informations de mobilité de Réseau d'Accès Radio Terrestre Universel, UTRAN, et le DRNC met à jour la clé d'interface radio après la réception du message d'achèvement de reconfiguration de canal physique ou du message de confirmation d'informations de mobilité UTRAN en fonction du numéro aléatoire généré par l'équipement utilisateur ;
de préférence, lorsqu'un numéro aléatoire est généré par le DRNC, le numéro aléatoire est un nouveau paramètre défini dans un Système Universel de Télécommunications Mobiles, UMTS.

6. Procédé de mise à jour d'une clé d'interface radio, le procédé comprenant le fait :
d'envoyer (602, 603) par le biais d'un contrôleur de réseau radio de desserte, SRNC, après que le SRNC a pris (601) une décision pour effectuer une translation, des informations de clé d'interface radio à un contrôleur de réseau radio de destination, DRNC, via un noeud de réseau central, et de mettre à jour (604a), par le biais du DRNC, la clé d'interface radio en fonction des informations de clé d'interface radio et d'effectuer un calcul afin d'obtenir une clé d'intégrité IK_{U} et/ou une clé de chiffrement CK_{U} mise (s) à jour ;
dans lequel lesdites informations de clé d'interface radio comportent au moins l'un des paramètres suivants ou une combinaison quelconque de ceux-ci : une clé intermédiaire K_{ASMEU}, une clé de chiffrement CK_{U}, et une clé d'intégrité IK_{U}, où la clé de chiffrement CK_{U} est utilisée pour crypter des données de plan utilisateur et une signalisation de plan de commande et la clé d'intégrité IK_{U} est utilisée pour effectuer la protection d'intégrité sur la signalisation de plan de commande,
dans lequel lesdites informations de clé d'interface radio comportent en outre : un compteur de répétition d'accès au réseau, et
ledit procédé comprend en outre le fait :
de gérer, par le biais d'un équipement utilisateur et du DRNC, le compteur de répétition d'accès au réseau respectivement, et d'initialiser le compteur de répétition d'accès au réseau après avoir terminé avec succès un processus d'Authentification et d'Accord-clé, ou après que le compteur de répétition d'accès au réseau a atteint un seuil maximal,
d'inclure, par le biais de l'équipement utilisateur, la valeur de compteur de répétition d'accès au réseau maintenue par l'équipement utilisateur dans un message d'achèvement de reconfiguration de canal physique ou dans un message de confirmation d'informations de mobilité de Réseau d'Accès Radio Terrestre Universel, UTRAN, envoyé au DRNC,
de comparer, par le biais du DRNC, après la réception du message d'achèvement de reconfiguration de canal physique ou du message de confirmation d'informations de mobilité UTRAN envoyé par l'équipement utilisateur, la valeur de compteur de répétition d'accès au réseau maintenue par le DRNC lui-même à la valeur de compteur de répétition d'accès au réseau reçue à partir de l'équipement utilisateur, et si les deux valeurs sont égales, le DRNC vérifie alors directement le message d'achèvement de reconfiguration de canal physique ou le message de confirmation d'informations de mobilité UTRAN ; si la valeur de compteur de répétition d'accès au réseau reçue à partir de l'équipement utilisateur est supérieure à la valeur de compteur de répétition d'accès au réseau maintenue par le DRNC lui-même, le DRNC remplace alors la valeur de compteur de répétition d'accès au réseau reçue à partir de l'équipement utilisateur par la valeur de compteur de répétition d'accès au réseau maintenue par le DRNC lui-même, met à jour la clé d'interface radio, puis vérifie le message reçu ; si la valeur de compteur de répétition d'accès au réseau reçue à partir de l'équipement utilisateur est inférieure à la valeur de compteur de répétition d'accès au réseau maintenue par le DRNC lui-même, alors la vérification étant non réussie, et le DRNC fonctionne conformément à une politique de l'opérateur.

7. Système de mise à jour d'une clé d'interface radio comprenant un contrôleur de réseau radio de desserte, SRNC, un contrôleur de réseau radio de destination, DRNC, un équipement utilisateur ; dans lequel
le SRNC est configuré pour : envoyer des informations de clé d'interface radio au DRNC directement après avoir décidé d'effectuer une translation ;
le DRNC est configuré pour : mettre à jour la clé d'interface radio en fonction des informations de clé d'interface radio, et pour effectuer un calcul afin d'obtenir une clé d'intégrité IK_{U} et/ou une clé de chiffrement CK_{U} mise (s) à jour ;
dans lequel lesdites informations de clé d'interface radio comportent au moins l'un des paramètres suivants ou une combinaison quelconque de ceux-ci : une clé intermédiaire K_{ASMEU}, une clé de chiffrement CK_{U}, et une clé d'intégrité IK_{U}, où la clé de chiffrement CK_{U} est utilisée pour crypter des données de plan utilisateur et une signalisation de plan de commande et la clé d'intégrité IK_{U} est utilisée pour effectuer la protection d'intégrité sur la signalisation de plan de commande,
dans lequel lesdites informations de clé d'interface radio comportent en outre : un compteur de répétition d'accès au réseau, et
dans lequel l'équipement utilisateur et le DRNC sont configurés pour gérer le compteur de répétition d'accès au réseau respectivement, et pour initialiser le compteur de répétition d'accès au réseau après avoir terminé avec succès un processus d'Authentification et d'Accord-Clé, ou après que le compteur de répétition d'accès au réseau a atteint un seuil maximal,
l'équipement utilisateur est configuré pour inclure la valeur de compteur de répétition d'accès au réseau maintenue par l'équipement utilisateur dans un message d'achèvement de reconfiguration de canal physique ou dans un message de confirmation d'informations de mobilité de Réseau d'Accès Radio Terrestre Universel, UTRAN, envoyé au DRNC,
le DRNC est configuré, après avoir reçu le message d'achèvement de reconfiguration de canal physique ou le message de confirmation d'informations de mobilité UTRAN envoyé par l'équipement utilisateur, pour comparer la valeur de compteur de répétition d'accès au réseau maintenue par le DRNC lui-même à la valeur de compteur de répétition d'accès au réseau reçue à partir de l'équipement utilisateur, et si les deux valeurs sont égales, pour vérifier alors le message d'achèvement de reconfiguration de canal physique ou le message de confirmation d'informations de mobilité UTRAN ; si la valeur de compteur de répétition d'accès au réseau reçue à partir de l'équipement utilisateur est supérieure à la valeur de compteur de répétition d'accès au réseau maintenue par le DRNC lui-même, pour remplacer alors la valeur de compteur de répétition d'accès au réseau reçue à partir de l'équipement utilisateur par la valeur de compteur de répétition d'accès au réseau maintenue par le DRNC lui-même, pour mettre à jour la clé d'interface radio, et puis pour vérifier le message reçu ; si la valeur de compteur de répétition d'accès au réseau reçue à partir de l'équipement utilisateur est inférieure à la valeur de compteur de répétition d'accès au réseau maintenue par le DRNC lui-même, alors la vérification étant non réussie, et pour fonctionner conformément à une politique de l'opérateur.

8. Système de mise à jour d'une clé d'interface radio comprenant un contrôleur de réseau radio de desserte, SRNC, un contrôleur de réseau radio de destination, DRNC, un équipement utilisateur et un noeud de réseau central ; dans lequel
le SRNC est configuré pour : envoyer des informations de clé d'interface radio au DRNC via le noeud de réseau central, après avoir décidé d'effectuer une translation ;
le noeud de réseau central est configuré pour : envoyer les informations de clé d'interface radio envoyées par le SRNC au DRNC ;
le DRNC est configuré pour : mettre à jour la clé d'interface radio en fonction des informations de clé d'interface radio, et pour effectuer un calcul afin d'obtenir une clé d'intégrité IK_{U} et/ou une clé de chiffrement CK_{U} mise (s) à jour ;
dans lequel lesdites informations de clé d'interface radio comportent au moins l'un des paramètres suivants ou une combinaison quelconque de ceux-ci : une clé intermédiaire K_{ASMEU}, une clé de chiffrement CK_{U}, et une clé d'intégrité IK_{U}, où la clé de chiffrement CK_{U} est utilisée pour crypter des données de plan utilisateur et une signalisation de plan de commande et la clé d'intégrité IK_{U} est utilisée pour effectuer la protection d'intégrité sur la signalisation de plan de commande,
dans lequel lesdites informations de clé d'interface radio comportent en outre : un compteur de répétition d'accès au réseau,
dans lequel l'équipement utilisateur et le DRNC sont configurés pour gérer le compteur de répétition d'accès au réseau respectivement, et pour initialiser le compteur de répétition d'accès au réseau après avoir terminé avec succès un processus d'Authentification et d'Accord-Clé, ou après que le compteur de répétition d'accès au réseau a atteint un seuil maximal,
le DRNC est configuré, après avoir reçu le message d'achèvement de reconfiguration de canal physique ou le message de confirmation d'informations de mobilité UTRAN envoyé par l'équipement utilisateur, pour comparer la valeur de compteur de répétition d'accès au réseau maintenue par le DRNC lui-même à la valeur de compteur de répétition d'accès au réseau reçue à partir de l'équipement utilisateur, et si les deux valeurs sont égales, pour vérifier alors le message d'achèvement de reconfiguration de canal physique ou le message de confirmation d'informations de mobilité UTRAN ; si la valeur de compteur de répétition d'accès au réseau reçue à partir de l'équipement utilisateur est supérieure à la valeur de compteur de répétition d'accès au réseau maintenue par le DRNC lui-même, pour remplacer alors la valeur de compteur de répétition d'accès au réseau reçue à partir de l'équipement utilisateur par la valeur de compteur de répétition d'accès au réseau maintenue par le DRNC lui-même, pour mettre à jour la clé d'interface radio, puis pour vérifier le message reçu ; si la valeur de compteur de répétition d'accès au réseau reçue à partir de l'équipement utilisateur est inférieure à la valeur de compteur de répétition d'accès au réseau maintenue par le DRNC lui-même, alors la vérification étant non réussie, et pour fonctionner conformément à une politique de l'opérateur.
